# EUROPÄISCHE PATENTANMELDUNG

(11) **EP 0 576 871 A1**
(43) Veröffentlichungstag der Anmeldung: **05.01.1994**
(21) Anmeldenummer: 93109107.8
(22) Anmeldetag: 07.06.1993
(51) Int. Cl.: F16B 39/08

(54) **Vorrichtung zur Sicherung**

(30) Priorität: 01.07.1992 DE 4221250
(71) Anmelder: Deutsche Aerospace Airbus Gesellschaft mit beschränkter Haftung, D-21129 Hamburg (DE)
(72) Erfinder: Behrens, Günter, D-2805 Stuhr 2 (DE); Ellmers, Wilfried, D-2807 Achim (DE)

(57) **Zusammenfassung**

Die Vorrichtung dient zur Sicherung einer Schraubenverbindung, die aus einem Schraubenbolzen (4) und einer Mutter (5) besteht. Bei einer Sicherungskappe (7) ist die Mutter (5) bereichsweise umschließend auf den Schraubenbolzen (4) aufschiebbar. Die Sicherungskappe ist im wesentlichen aus einem mit einer Bolzenausnehmung (16) versehenen Boden (8) und einer Seitenwandung (9) ausgebildet. Im Bereich einer Innenseite (10) der Seitenwandung (9) ist eine die Mutter (5) formschlüssig beaufschlagende Profilierung (11) angeordnet. Im Bereich einer der Seitenwandung (9) abgewandten Seite des Bodens (8) ist ein den Schraubenbolzen (4) umschließender Steg (13) vorgesehen. Der Steg (13) weist mindestens eine Stegausnehmung (14) auf, die zur Aufnahme eines den Schraubenbolzen (4) durchdringenden Sicherungsstiftes (17) vorgesehen ist.

## Beschreibung

Die Erfindung betrifft eine Vorrichtung zur Sicherung einer Schraubenverbindung, die aus einem Schraubenbolzen und einer Mutter besteht.

Derartige Sicherungen können beispielsweise als ein Splint ausgebildet sein, der den Bolzen oder den Bolzen und die Mutter gemeinsam durchdringt. Nachteilig ist dabei, daß bei einer ausschließlichen Durchdringung des Bolzens zwar ein Abfallen der Mutter verhindert wird, ein Lösen der Mutter jedoch möglich ist. Bei einer gemeinsamen Durchdringung der Mutter und des Bolzens durch den Splint muß entweder die erforderliche Bohrung nach einer Durchführung der Schraubverbindung hergestellt werden, was mit einem erheblichen Arbeitsaufwand verbunden ist, oder die Mutter kann nur bis zur einer definierten Stelle angezogen werden, um ein Durchschieben des Splintes zu ermöglichen. Dies hat zur Folge, daß die Mutter möglicherweise nicht fest genug angezogen werden kann.

Aufgabe der vorliegenden Erfindung ist es, eine Vorrichtung der einleitend genannten Art derart zu verbessern, daß eine ausreichende Sicherung der Mutter gegen ein Lösen in einer Vielzahl von Positionierungen erfolgen kann.

Diese Aufgabe wird erfindungsgemäß dadurch gelöst, daß eine Sicherungskappe die Mutter bereichsweise umschließend auf den Schraubenbolzen aufschiebbar ist, die Sicherungskappe aus einem mit einer Bolzenausnehmung versehenen Boden- und einer Seitenwandung ausgebildet ist, im Bereich einer Innenseite der Seitenwandung eine die Mutter formschlüssig beaufschlagende Profilierung angeordnet ist und im Bereich einer der Seitenwandung abgewandten Seite des Bodens ein den Schraubenbolzen mindestens bereichsweise umschließender Steg vorgsehen ist, der mindestens eine Stegausnehmung ausweist, die zur Aufnahme eines den Schraubenbolzen durchdringenden Sicherungsstiftes vorgesehen ist.

Durch die Kombination des mit der Stegausnehmung versehenen Steges und der mit dem Boden verbundenen Seitenwandung ist es möglich, eine Verschieblichkeit eines Bolzenkopfes des Schraubenbolzens in Relation zur Sicherungskappe durchzuführen und durch die die Mutter formschlüssig beaufschlagende Profilierung dennoch eine ausreichende Fixierung der Mutter vorzunehmen. Es ist somit möglich, vorgefertigte Ausnehmungen im Bereich des Bolzens vorzusehen und ein Festziehen der Mutter in einem weiten Bereich zu ermöglichen. Theoretisch ist zwar nicht jede beliebige Positionierung der Mutter einnehmbar, da durch die Profilierung der Seitenwandung eine Quantisierung vorgenommen wird, aufgrund der Elastizität der Verbindung von Bolzen und Mutter hat dies jedoch praktisch keine Auswirkungen.

Weiterhin wird zur Sichtbarmachung der Mutterverschraubung der Handhabung vorgeschlagen, daß der Steg in drei jeweils mit einem Abstand zueinander angeordnete Segmente unterteilt ist, die im wesentlichen entlang einer Kreisbahn radial zu einer Längsachse des Schraubenbolzens angeordnet sind.

Die Variationsmöglichkeiten zur Positionierung der Sicherungskappe relativ zur Mutter können auch dadurch erhöht werden, daß die Profilierung aus Vorsprüngen und Vertiefungen ausgebildet ist und durch die Vorsprünge und die Vertiefungen eine Teilung ausgebildet wird, die eine feinere Strukturierung als ein Außenprofil der Mutter aufweist.

Zur Ermöglichung einer gleichmäßigen Krafteinleitung in die Sicherungskappe wird vorgeschlagen, daß jeweils zwei Stegausnehmungen relativ zur Längsachse einander gegenüberliegend angeordnet sind.

Ein zweckmäßiger Kompromiß zwischen einem großen Freiraum bei der Verwendung und einem geringen Aufwand bei der Fertigung besteht darin, daß entlang einer symmetrisch zur Längsachse angeordneten Kreisbahn drei Paare von Stegausnehmungen angeordnet sind.

Zur Ermöglichung einer vollständigen Durchdringung des Schraubenbolzens und damit zur Gewährleistung einer hohen mechanischen Belastbarkeit wird vorgeschlagen, daß der Schraubenbolzen mit mindestens einer Bolzenausnehmung zur Aufnahme des Sicherungsstiftes versehen ist.

Zur Realisierung einer kompakten Bauweise wird vorgeschlagen, daß von der Seitenwandung eine Kreisbahn aufgespannt wird, die einen größeren Abstand zur Längsachse aufweist, als eine vom Steg aufgespannte Kreisbahn.

In der Zeichnung sind Ausführungsbeispiele der Erfindung schematisch dargestellt. Es zeigen:

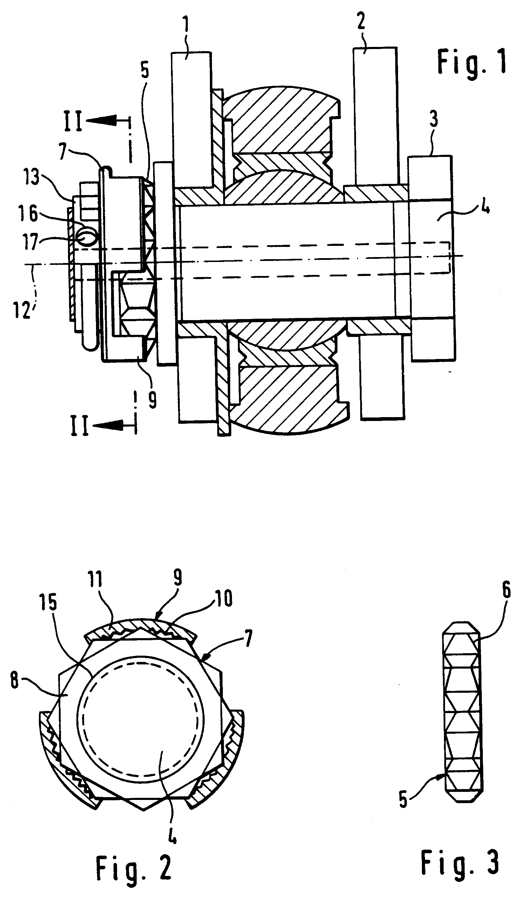

- Fig. 1: eine teilweise geschnittene Seitenansicht einer Kombination eines Bolzens mit einer Mutter, bei der die Mutter von einer Sicherungskappe fixiert ist,
- Fig. 2: einen Querschnitt gemäß Schnittlinie II-II in Figur 1,
- Fig. 3: eine Seitenansicht einer Mutter,

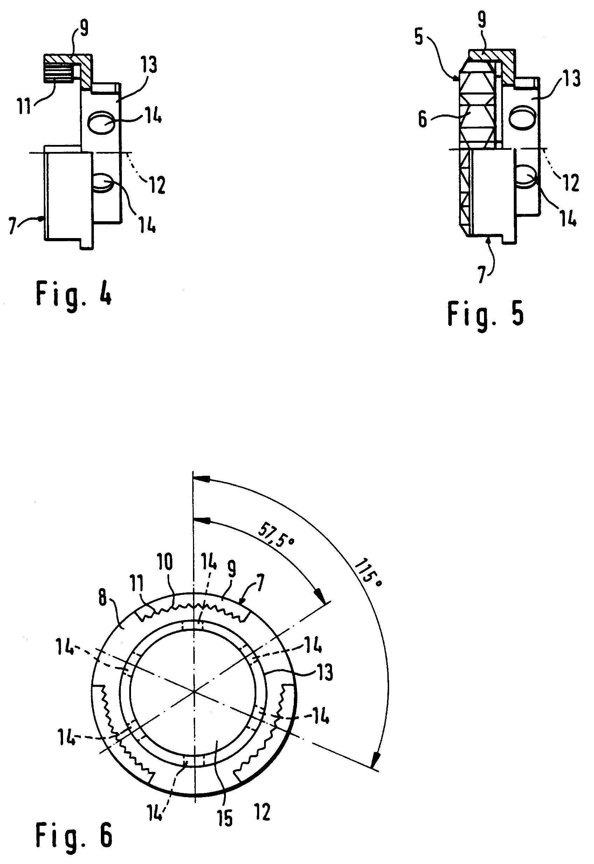

- Fig. 4: eine teilweise geschnittene Seitenansicht einer Sicherungskappe,
- Fig. 5: eine Darstellung entsprechend Figur 4 mit in die Sicherungskappe eingeführter Mutter und
- Fig. 6: eine Draufsicht auf eine Sicherungskappe
Zur Verbindung von Komponenten (1,2) kann ein mit einem Bolzenkopf (3) versehener Schraubenbolzen (4) verwendet werden, der im Bereich eines Schaftes mit einem Außengewinde versehen ist, auf dem eine Mutter (5) geführt ist. Die Mutter (5) ist im Bereich ihres äußeren Umfanges mit einer Riffelung (6) versehen, die aus nach außen vorstehenden Vorsprüngen und die Vorsprünge in einander überleitenden Vertiefungen besteht.

Zur Fixierung der Mutter (5) ist eine Sicherungskappe (7) vorgesehen, die im wesentlichen aus einem Boden (8) und einer Seitenwandung (9) ausgebildet ist, die den Boden (8) in einer der Mutter (5) zugewandten Richtung überkragt und im Bereich einer Innenseite (10) eine Profilierung (11) aufweist, die ähnlich zur Riffelung (6) ausgebildet ist, jedoch eine dichtere Folge von Vorsprüngen und Vertiefungen aufweist. Hierdurch ist es möglich, die Sicherungskappe (7) relativ zu einer Längsachse (12) des Schraubenbolzens (4) in einer Vielzahl von Rotationspositionierungen auf die Mutter (5) aufzuschieben.

Im Bereich seiner der seitenwandung (9) abgewandten Ausdehnung ist der Boden (8) mit einem Steg (13) versehen, der eine Mehrzahl von Stegausnehmungen (14) aufweist. Der Steg (13) kann den Boden (8) kreisförmig umschließen, es ist aber auch möglich, eine Mehrzahl von Stegsegmenten vorzusehen, die jeweils durch einen Zwischenraum von einander getrennt sind. Zur Ermöglichung eines Aufschiebens auf den Schraubenbolzen (4) ist der Boden (8) mit einer Bodenausnehmung (15) versehen, deren Durchmesser etwas größer als der Durchmesser des Schraubenbolzens (4) ist.

Zur Durchführung einer Schraubenverbindung wird zunächst die Mutter (5) auf den Schraubenbolzen (4) aufgeschraubt und ausreichend festgezogen. Anschließend wird die Sicherungskappe (7) derart auf die Mutter (5) aufgeschoben, daß eine der Stegausnehmungen (14) als Verlängerung einer Bolzenausnehmung (16) positioniert ist, die sich im wesentlichen radial zur Längsachse (12) erstreckt und zur Aufnahme eines die Mutter (5) und den Schraubenbolzen (4) durchdringenden Sicherungsstiftes (17) vorgesehen ist. Nach einer geeigneten Positionierung der Sicherungskappe (7) wird der Sicherungsstift (17) durch die Stegausnehmung (14) und die Bolzenausnehmung (16) hindurchgeschoben. Die Positionierung der Sicherungskappe (7) relativ zur Mutter (5) in Richtung der Längsachse (12) ergibt sich aus einer jeweils vorliegenden Fixierungssituation der Mutter (5). Der jeweils mögliche Sicherungsbereich wird durch die Ausdehnung der Mutter (5) und der Sicherungskappe (7) in Richtung der Längsachse (12) vorgegeben. Bei einer Anwendung, bei der die Positionierung der Mutter (5) relativ zum Schraubenbolzen (4) vergleichsweise eng definiert vorgegeben ist, ist eine geringe Ausdehnung der Bauelemente in Richtung der Längachse (12) ausreichend, bei einem größeren Arbeitsbereich ist einer größere Ausdehnung dieser Bauelemente in Richtung der Längsachse (12) zweckmäßig.

## Patentansprüche

1. Vorrichtung zur Sicherung einer Schraubenverbindung, die aus einem Schraubenbolzen und einer Mutter besteht, dadurch gekennzeichnet, daß eine Sicherungskappe (7) die Mutter (5) bereichsweise umschließend auf den Schraubenbolzen (4) aufschiebbar ist, die Sicherungskappe (7) aus einem mit einer Bolzenausnehmung (16) versehenen Boden (8) und einer Seitenwandung (9) ausgebildet ist, im Bereich einer Innenseite (10) der Seitenwandung (9) eine die Mutter (5) formschlüssig beaufschlagende Profilierung (11) angeordnet ist und im Bereich einer der Seitenwandung (9) abgewandten Seite des Bodens (8) ein den Schraubenbolzen (4) mindestens bereichsweise umschließender Steg (13) vorgesehen ist, der mindestens eine Stegausnehmung (14) aufweist, die zur Aufnahme eines den Schraubenbolzen (4) durchdringenden Sicherungsstiftes (17) vorgesehen ist.

2. Vorrichtung nach Anspruch 1, dadurch gekennzeichnet, daß der Steg (3) in drei jeweils mit einem Abstand zueinander angeordnete Segmente unterteilt ist, die im wesentlichen entlang einer Kreisbahn radial zu einer Längsachse (12) des Schraubenbolzens (4) angeordnet sind.

3. Vorrichtung nach Anspruch 1 oder 2, dadurch gekennzeichnet, daß die Profilierung (11) aus Vorsprüngen und Vertiefungen ausgebildet ist und durch die Vorsprünge und die Vertiefungen eine Teilung ausgebildet wird, die eine feinere Strukturierung als ein Außenprofil der Mutter (5) aufweist.

4. Vorrichtung nach einem der Ansprüche 1 bis 3, dadurch gekennzeichnet, daß jeweils zwei Stegausnehmungen (14) relativ zur Längsachse (12) einander gegenüberliegend angeordnet sind.

5. Vorrichtung nach einem der Ansprüche 1 bis 4, dadurch gekennzeichnet, daß entlang einer symmetrisch zur Längsachse (12) angeordneten Kreisbahn drei Paare von Stegausnehmungen (14) angeordnet sind.

6. Vorrichtung nach einem der Ansprüche 1 bis 5, dadurch gekennzeichnet, daß der Schraubenbolzen (4) mit mindestens einer Bolzenausnehmung (16) zur Aufnahme des Sicherungsstiftes (17) versehen ist.

7. Vorrichtung nach einem der Ansprüche 1 bis 6, dadurch gekennzeichnet, daß von der Seitenwandung (9) eine Kreisbahn aufgespannt wird, die einen größeren Abstand zur Längsachse (12) aufweist, als eine vom Steg (13) aufgespannte Kreisbahn.
